# EUROPÄISCHE PATENTSCHRIFT

(11) **EP 1 331 420 B1**
(45) Veröffentlichungstag und Bekanntmachung des Hinweises auf die Patenterteilung: **27.02.2008**
(21) Anmeldenummer: 03000546.6
(22) Anmeldetag: 10.01.2003
(51) Int. Cl.: F16H 25/20, H02K 7/116

(54) **Baugruppe aus Spindel und Bewegungsmutter**
Subassembly with a spindle and a nut
Ensemble comportant une broche et un écrou

(30) Priorität: 29.01.2002 DE 10203385
(43) Veröffentlichungstag der Anmeldung: 30.07.2003
(73) Patentinhaber: TRW Automotive Electronics & Components GmbH, 78315 Radolfzell (DE)
(72) Erfinder: Krause, Reinhard, 95615 Marktredwitz-Brand (DE)
(74) Vertreter: Sties, Jochen

(56) Entgegenhaltungen:
- EP-A- 0 565 045
- DE-A1- 10 122 961
- DE-U1- 29 805 290

## Beschreibung

Die Erfindung betrifft eine Baugruppe bestehend aus einer Spindel und einer auf der Spindel angeordneten Bewegungsmutter. Derartige Baugruppen dienen dazu, Rotationsbewegungen in Translationsbewegungen zu übertragen.

Wenn eine solche Baugruppe für geringe Belastungen ausgelegt ist, beispielsweise bei einem Kraftfahrzeug zur Betätigung von Lüftungsdüsen oder Luftausströmgittern, bestehen die beiden Bauteile Spindel und Bewegungsmutter vorzugsweise aus Kunststoff. Im Hinblick auf einen geringen Montageaufwand wäre es wünschenswert, die beiden Bauteile als Spritzgußteile auszubilden, von denen das eine unlösbar mit dem anderen verbunden ist.

Grundsätzlich ist es möglich, ein Spritzgußteil unmittelbar auf das andere aufzuspritzen, so daß die beiden Spritzgußteile relativ zueinander beweglich sind. Dazu kann beispielsweise ein Verfahren zum Spritzgießen von Gegenständen aus wenigstens zwei Teilen verwandt werden, wie es aus der DE 33 40 122 C2 bekannt ist. Bei diesem Verfahren wird ein erstes Spritzgußteil in einer ersten Form gefertigt, dieses dann aus der ersten Form entnommen und in eine zweite Form verbracht. Das erste Spritzgußteil kühlt dabei ab und erstarrt so weit, daß anschließend in der zweiten Form das zweite Spritzgußteil in das erste Spritzgußteil eingespritzt werden kann. Damit können die beiden Spritzgußteile gegeneinander beweglich, aber unlösbar miteinander verbunden sein.

Da das erste Spritzgußteil bereits teilweise verfestigt ist, bevor das zweite Spritzgußteil ausgebildet wird, hat das erste Spritzgußteil bereits einen Teil seiner unvermeidbaren Schwindung erfahren, bevor das Material für das zweite Spritzgußteil eingespritzt wird. Dies kann dazu führen, daß das zweite Spritzgußteil sich auf dem ersten Spritzgußteil verklemmt, wenn das zweite Spritzgußteil nun seinerseits schwindet. Wenn das zweite Spritzgußteil die Bewegungsmutter ist, wird sie beim Erstarren auf die Spindel aufschrumpfen, so daß die beiden Bauteile sehr schwergängig sind oder gar relativ zueinander blockiert sind.

Eine Baugruppe mit den Merkmalen des Oberbegriffs des Anspruchs 1 ist aus der EP 0 565 045 A1 bekannt. Die Bewegungsmutter dieser Baugruppe besteht aus einem Zylinderteil mit Innengewinde, mit dem die beiden Gewindeabschnitte der geteilten Spindel in Eingriff gebracht werden.

Aufgabe der Erfindung ist es, eine aus einer Spindel und einer Bewegungsmutter bestehende Baugruppe der eingangs beschriebenen Art zu schaffen, bei der die Beweglichkeit zwischen Spindel und Bewegungsmutter nicht beeinträchtigt ist, selbst wenn eines der Bauteile auf das andere aufgespritzt bzw. in dieses eingespritzt wird.

Gemäß der Erfindung wird dazu eine Baugruppe verwendet, bestehend aus einer Spindel und einer auf der Spindel angeordneten Bewegungsmutter, wobei die Spindel und die Bewegungsmutter aus Kunststoff bestehen, und wobei mindestens eines der beiden Bauteile Spindel und Bewegungsmutter derart federnd ausgebildet ist, daß ein Festsitz der Bewegungsmutter auf der Spindel verhindert ist. Ferner weist die Spindel der erfindungsgemäßen Baugruppe einen ersten und einen zweiten Anschlag für die Bewegungsmutter auf, die beine einstückig mit der Spindel ausgebildet sind. Durch die federnde Ausführung von Spindel oder Bewegungsmutter wird erreicht, daß auch bei einer Reduzierung der radialen Abmessungen der Bewegungsmutter mindestens entweder die Spindel oder die Bewegungsmutter elastisch so nachgibt, daß die Beweglichkeit der Bewegungsmutter gegenüber der Spindel nicht gestört ist.

In einer bevorzugten Ausführungsform der Erfindung wird ein Stellantrieb mit einer Baugruppe aus Spindel und der auf der Spindel angeordneten Bewegungsmutter ausgestattete (Anspruch 9). Ein solcher Stellantrieb kann insbesondere zur Verstellung einer Lüftungsklappe eines Lüftungssystems eines Kraftfahrzeugs oder eines verstellbaren Scheinwerfers verwendet werden.

Weitere vorteilhafte Ausgestaltungen der Erfindung ergeben sich aus den Unteransprüchen.

Die Erfindung wird nachfolgend unter Bezugnahme auf verschiedene Ausführungsformen beschrieben, die in den beigefügten Zeichnungen dargestellt sind. Es zeigen:
- Figur 1 eine perspektivische Ansicht der Spindel gemäß einer ersten Ausführungsform der Erfindung,
- Figur 2 eine perspektivische Ansicht der Baugruppe aus Spindel und Bewegungsmutter gemäß der ersten Ausführungsform der Erfindung,
- Figur 3a eine Seitenansicht der ersten erfindungsgemäßen Ausführungsform der Baugruppe,
- Figur 3b eine zweite Seitenansicht der ersten erfindungsgemäßen Ausführungsform der Baugruppe,
- Figur 3c eine dritte Seitenansicht der ersten erfindungsgemäßen Ausführungsform der Baugruppe,
- Figur 3d eine Schnittansicht der ersten erfindungsgemäßen Ausführungsform der Baugruppe entlang der Linie IIID-IIID in Figur 3c,
- Figur 4 eine weitere Seitenansicht der ersten erfindungsgemäßen Ausführungsform der Baugruppe,
- Figur 5 eine Schnittansicht der ersten erfindungsgemäßen Ausführungsform der Baugruppe entlang der Linie V-V in Figur 4, und
- Figur 6 eine perspektivische Ansicht der Bewegungsmutter gemäß einer zweiten Ausführungsform der Erfindung.

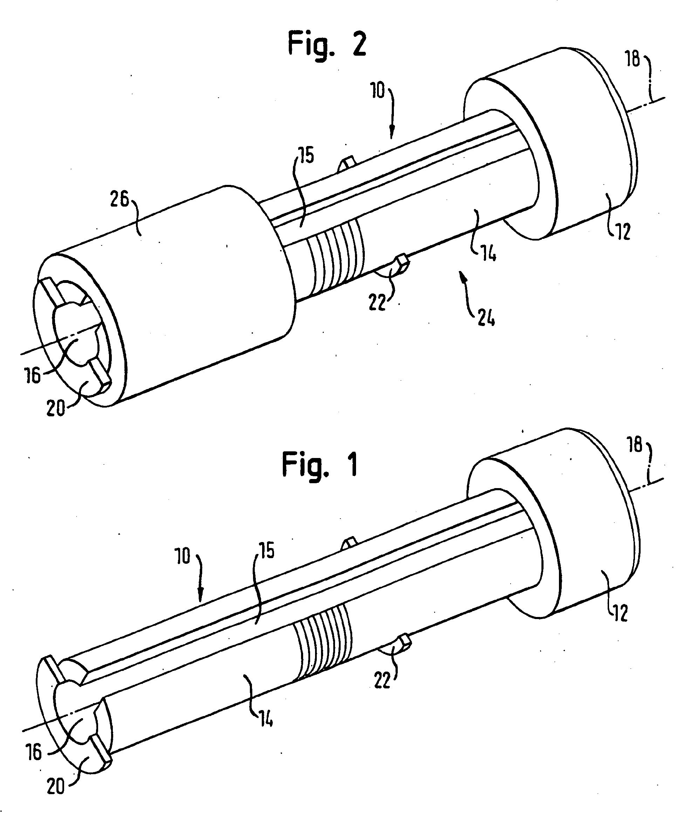

In Figur 1 sieht man eine Spindel 10, die aus Kunststoff besteht, mit einem Spindelkopf 12 und einem Spindelschaft 14. Der Spindelschaft 14 ist hohl, da sich in seinem Inneren ein zylindrische Durchgangsöffnung 16 mit einer Längsachse 18 erstreckt. Weiterhin ist der Spindelschaft mit einem durchgehenden Spindelschlitz 15 versehen, der sich von der Außenfläche des Spindelschaftes bis zur Durchgangsöffnung erstreckt.

Der Spindelschaft 14 weist an seinem dem Spindelkopf 12 gegenüberliegenden axialen Ende einen ersten Anschlag 20, und in einem in etwa mittleren Bereich des Spindelschafts einen zweiten Anschlag 22 auf. Beide Anschläge sind einstückig mit der Spindel ausgebildet.

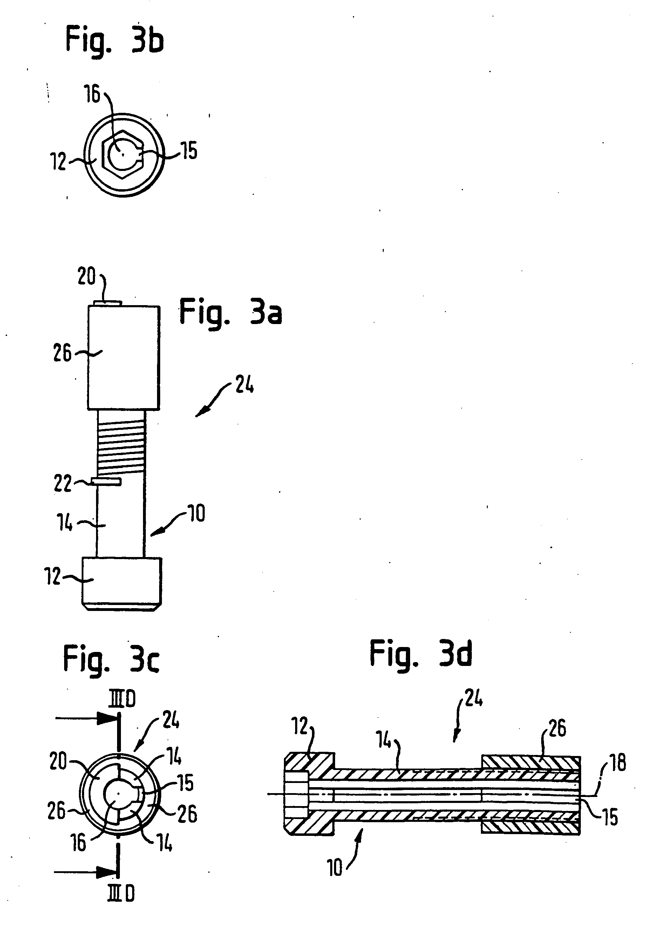

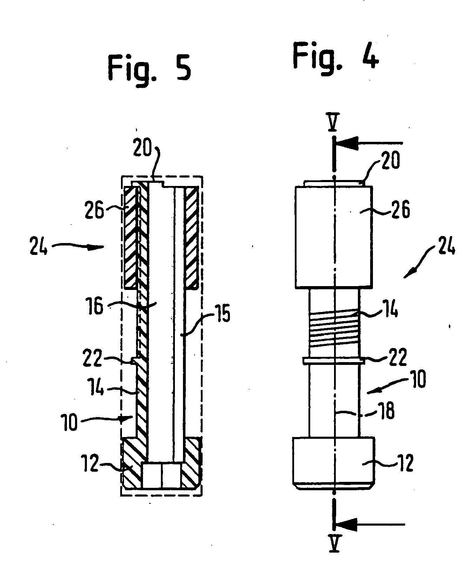

In den Figuren 2 bis 5 ist eine Baugruppe 24 mit der Spindel 10 und einer Bewegungsmutter 26 zu sehen. Die im wesentlichen hohlzylinderförmige Bewegungsmutter 26 besteht aus Kunststoff und ist auf dem Spindelschaft 14 zwischen dem ersten Anschlag 20 und dem zweiten Anschlag 22 angeordnet. Das auf dem Spindelschaft 14 vorhandene Außengewinde ist hier nur schematisch dargestellt. Nicht dargestellt ist das Innengewinde der Bewegungsmutter 26, das mit dem Außengewinde des Spindelschafts korrespondiert.

Durch Drehen der Spindel 10 kann die Bewegungsmutter 26 zwischen dem ersten Anschlag 20 und dem zweiten Anschlag 22 bewegt werden. Der erste Anschlag dient der Begrenzung des Wegs der Bewegungsmutter über das Ende des Spindelschafts 14 hinaus, der zweite Anschlag dient der Begrenzung des Wegs der Bewegungsmutter in Richtung auf den Spindelkopf 12 hin. Dies ist besonders vorteilhaft, da hierdurch zum einen die Bewegungsmutter 26 nicht verlorengehen kann, zum anderen aber der Weg der Bewegungsmutter auf dem Spindelschaft auf einen festgelegten Bereich begrenzt wird.

Im folgenden soll ein Verfahren zur Herstellung der ersten Ausführungsform der Baugruppe aus Spindel und Bewegungsmutter dargestellt werden.

Die Spindel 10 wird als Spritzgußteil hergestellt, wobei ein einstückiger Kern verwendet wird, um die Durchgangsöffnung 16 und den Spindelschlitz 15 zu erzeugen. Der Kern steht, damit er später einfach entfernt werden kann, geringfügig über die Außenfläche des Spindelschafts hervor. Dieser hervorstehende "Rücken" ist nicht mit einem Gewinde versehen.

Nach dem Spritzgießen der Spindel wird diese, ohne daß der Kern entfernt wurde, in ein zweites Werkzeug eingelegt, und die Bewegungsmutter 26 wird aufgespritzt. Bei diesem Arbeitsgang dient der im Spindelschaft verbliebene Kern zur Stabilisierung; er verhindert, daß sich der Spindelschaft unter dem Spritzdruck verformt.

Nach dem Spritzen der Bewegungsmutter 26 kann der Kern in Längsrichtung aus der Spindel 10 herausgezogen werden. Dies ist problemlos möglich, da der über die Außenfläche des Spindelschafts hervorstehende Rücken des Kern gewindefrei ist. Die von dem vorstehenden Rücken gebildete Vertiefung im Innengewinde der Bewegungsmutter ist nicht störend.

Die beim Erstarren der Bewegungsmutter 26 auftretende Schwindung mit der entsprechenden Verringerung des Innendurchmessers des Gewinde der Bewegungsmutter wird dadurch kompensiert, daß der Spindelschaft elastisch nachgibt, sich also die Breite des Spindelschlitzes 15 verringert. Dadurch kann die Bewegungsmutter unter geringer Reibung auf dem Spindelschaft 14 bewegt werden.

Die Höhe der Reibung zwischen der Bewegungsmutter und der Spindel kann durch das Verhältnis zwischen dem Innendurchmesser der Durchgangsöffnung 16 und dem Außendurchmesser des Spindelschafts 14 eingestellt werden, also durch die Auswahl der Wandstärke des Spindelschafts. Je kleiner die Wandstärke ist, desto geringer ist auch die einer Verformung entgegenwirkende Federkraft des Spindelschafts und entsprechend gering ist auch die Reibung.

Die Elastizität des Spindelschafts kann so eingestellt werden, daß ein Art Rutschkupplung zwischen der Bewegungsmutter und dem Spindelschaft erzielt wird. Wenn die Bewegungsmutter an einen der Anschläge gelangt, die Spindel jedoch weiterbewegt wird, verengt sich der Spindelschlitz so weit, daß die Bewegungsmutter auf dem Gewinde des Spindelschafts durchrutscht und in den nächsten Gewindegang wieder einrastet.

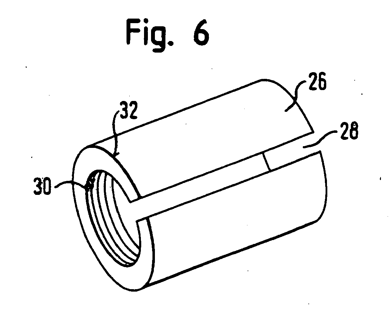

In Figur 6 ist die im wesentlichen hohlzylinderförmige Bewegungsmutter 26 der zweiten Ausführungsform mit einer inneren Wand 30 und einer äußeren Wand 32 dargestellt. In der Bewegungsmutter befindet sich ein Mutterschlitz 28, der sich über die gesamte Länge der Bewegungsmutter von der inneren Wand 30 bis zur äußeren Wand 32 erstreckt.

Die zweite Ausführungsform der Baugruppe aus Spindel und Bewegungsmutter wird im folgender Weise hergestellt: Zunächst wird die Spindel als massives Spritzgußteil hergestellt. Dabei wird ein Spritzgußwerkzeug verwendet, das in einem Bereich des Gewindes mit einem länglichen Vorsprung versehen ist, dessen Abmessungen etwa dem Mutternschlitz entsprechen, so daß auf dem Spindelschaft an einer Stelle eine gewindefreie Nut gebildet wird. In einem zweiten Schritt wird die Bewegungsmutter auf die Spindel aufgespritzt. Dabei ist am Spritzgußwerkzeug ein Steg vorgesehen, der zur Herstellung des Mutterschlitzes dient und in die gewindefreie Nut der Spindel eintaucht.

Grundsätzlich ist auch möglich, die Spindel ohne die gewindefreie Nut auszubilden und den Steg am zweiten Spritzgußwerkzeug mit einem Abbild des Gewindes der Spindel zu versehen, so daß der Steg exakt in das Außengewinde des Spindelschafts eingreifen kann. Dies ist jedoch mit einem großen Herstellungsaufwand verbunden.

Die Bewegungsmutter unterliegt einer Schwindung, kann sich aber wegen des über die gesamte Länge der Bewegungsmutter erstreckenden Mutterschlitzes 28 über dem Spindelschaft 14 der Spindel 10 elastisch federnd aufweiten. Auch hier ist eine leichtgängige Bewegung der Bewegungsmutter 26 auf dem Spindelschaft 14 sichergestellt. Auch kann der oben beschriebene Effekt einer Rutschkupplung herbeigeführt werden.

## Patentansprüche

1. Baugruppe, bestehend aus einer Spindel (10) und einer auf der Spindel angeordneten Bewegungsmutter (26), wobei die Spindel (10) und die Bewegungsmutter (26) aus Kunststoff bestehen, und wobei mindestens eines der beiden Bauteile Spindel (10) und Bewegungsmutter (26) derart federnd ausgebildet ist, daß ein Festsitz der Bewegungsmutter (26) auf der Spindel (10) verhindert ist, **dadurch gekennzeichnet, daß** die Spindel (10) einen ersten und einen zweiten Anschlag (20, 22) für die Bewegungsmutter (26) aufweist, die beide einstückig mit der Spindel (10) ausgebildet sind.

2. Baugruppe nach Anspruch 1, **dadurch gekennzeichnet, daß** die Spindel (10) einen Spindelschlitz (15) hat.

3. Baugruppe nach Anspruch 2, **dadurch gekennzeichnet, daß** der Spindelschlitz (15) einen erweiterten Schlitzabschnitt (16) im Bereich einer Längsachse (18) der Spindel (10) aufweist.

4. Baugruppe nach Anspruch 2 oder 3, **dadurch gekennzeichnet, daß** der Spindelschlitz (15) radial durchgehend ist.

5. Baugruppe nach Anspruch 1, **dadurch gekennzeichnet, daß** die Bewegungsmutter (26) einen Mutterschlitz (28) hat.

6. Baugruppe nach einem der vorhergehenden Ansprüche, **dadurch gekennzeichnet, daß** die Spindel (10) ein Spritzgußteil ist.

7. Baugruppe nach einem der vorhergehenden Ansprüche, **dadurch gekennzeichnet, daß** die Bewegungsmutter (26) ein Spritzgußteil ist.

8. Baugruppe nach einem der vorhergehenden Ansprüche, **dadurch gekennzeichnet, daß** die Bewegungsmutter (26) auf die Spindel (10) aufgespritzt ist.

9. Stellantrieb mit einer Baugruppe nach einem der vorhergehenden Ansprüche.

10. Stellantrieb nach Anspruch 9, **dadurch gekennzeichnet, daß** durch den Stellantrieb eine Lüftungsklappe eines Lüftungssystems eines Kraftfahrzeugs angetrieben wird.

11. Stellantrieb nach Anspruch 9 oder 10, **dadurch gekennzeichnet, daß** die Elastizität des Spindelschafts (14) so eingestellt ist, daß eine Rutschkupplung zwischen der Bewegungsmutter (26) und dem Spindelschaft (14) gebildet ist, damit dann, wenn die Bewegungsmutter (26) an einen der Anschläge (20, 22) gelangt, die Spindel (10) jedoch weiterbewegt wird, die Bewegungsmutter (26) auf dem Gewinde des Spindelschafts (14) durchrutscht und in den nächsten Gewindegang wieder einrastet.

## Claims

1. An assembly comprised of a spindle (10) and a moving nut (26) disposed on the spindle, the spindle (10) and the moving nut (26) being made of plastics, and at least one of the spindle (10) and the moving nut (26) being designed to be resilient such that the moving nut (26) is prevented from getting stuck on the spindle (10), **characterized in that** the spindle (10) has a first and a second stop (20, 22) for the moving nut (26), which are both integrally formed with the spindle (10).

2. The assembly as claimed in claim 1, **characterized in that** the spindle (10) has a spindle slot (15).

3. The assembly as claimed in claim 2, **characterized in that** the spindle slot (15) has an expanded slot portion (16) in the vicinity of a longitudinal axis (18) of the spindle (10).

4. The assembly as claimed in claim 2 or 3, **characterized in that** the spindle slot (15) is radially continuous.

5. The assembly as claimed in claim 1, **characterized in that** the moving nut (26) has a nut slot (28).

6. The assembly as claimed in any of the preceding claims, **characterized in that** the spindle (10) is an injection-molded part.

7. The assembly as claimed in any of the preceding claims, **characterized in that** the moving nut (26) is an injection-molded part.

8. The assembly as claimed in any of the preceding claims, **characterized in that** the moving nut (26) is applied onto the spindle (10) by injection-molding.

9. An actuator comprising an assembly as claimed in any of the preceding claims.

10. The actuator as claimed in claim 9, **characterized in that** a ventilation flap of a ventilation system of a motor vehicle is driven by the actuator.

11. The actuator as claimed in claim 9 or 10, **characterized in that** the elasticity of the spindle shank (14) is adjusted such that a sliding clutch is formed between the moving nut (26) and the spindle shank (14), so that when the moving nut (226) comes into contact with one of the stops (20, 22), but the spindle (10) continues to be moved, the moving nut (26) will slip through on the thread of the spindle shank (14) and snap into the next turn of the thread.

## Revendications

1. Ensemble constitué par une broche (10) et un écrou mobile (26) agencé sur la broche, la broche (10) et l'écrou mobile (26) étant en matière plastique, et au moins l'un des deux composants broche (10) et écrou mobile (26) étant réalisé élastique de telle sorte qu'un blocage de l'écrou mobile (26) sur la broche (10) soit empêché, **caractérisé en ce que** la broche (10) comporte des première et deuxième butées (20, 22) pour l'écrou mobile (26) qui sont toutes les deux réalisées d'un seul tenant avec la broche (10).

2. Ensemble selon la revendication 1, **caractérisé en ce que** la broche (10) présente une fente de broche (15).

3. Ensemble selon la revendication 2, **caractérisé en ce que** dans la région d'un axe longitudinal (18) de la broche (10), la fente de broche (15) présente un tronçon de fente (16) évasé.

4. Ensemble selon la revendication 2 ou 3, **caractérisé en ce que** la fente de broche (15) est traversante en direction radiale.

5. Ensemble selon la revendication 1, **caractérisé en ce que** l'écrou mobile (26) présente une fente d'écrou (28).

6. Ensemble selon l'une des revendications précédentes, **caractérisé en ce que** la broche (10) est une pièce moulée par injection.

7. Ensemble selon l'une des revendications précédentes, **caractérisé en ce que** l'écrou mobile (26) est une pièce moulée par injection.

8. Ensemble selon l'une des revendications précédentes, **caractérisé en ce que** l'écrou mobile (26) est moulé sur la broche (10) par injection.

9. Mécanisme de commande comportant un ensemble selon l'une des revendications précédentes.

10. Mécanisme de commande selon la revendication 9, **caractérisé en ce qu'**un volet d'aération d'un système d'aération d'un véhicule automobile est entraîné au moyen du mécanisme de commande.

11. Mécanisme de commande selon la revendication 9 ou 10, **caractérisé en ce que** l'élasticité de la tige de broche (14) est ajustée de manière à ce qu'un accouplement à glissement soit réalisé entre l'écrou mobile (26) et la tige de broche (14) afin que l'écrou mobile (26) glisse sur le filetage de la tige de broche (14) et s'engage à nouveau dans le pas de filet suivant lorsque l'écrou mobile (26) touche l'une des butées (20, 22) mais la broche (10) continue à être déplacée.
